# FASCICULE DE BREVET EUROPEEN

(11) **EP 4 594 018 B1**
(45) Date de publication et mention de la délivrance du brevet: **08.04.2026**
(21) Numéro de dépôt: 23793424.5
(22) Date de dépôt: 22.09.2023
(51) Int. Cl.: B05B 7/14, B05B 13/06, B22F 3/115, B22F 5/00, C23C 24/04, F01D 5/00, F01D 25/24, F02K 1/72, F02K 1/80, F02K 1/00, B05D 5/00, B05D 1/12

(54) **BUSE, DISPOSITIF DE PROJECTION DYNAMIQUE, PROCEDE DE REVETEMENT ET PROCEDE DE REPARATION ASSOCIES**
DÜSE, LUFTUNTERSTÜTZTE SPRÜHVORRICHTUNG, ZUGEHÖRIGE BESCHICHTUNGS- UND REPARATURVERFAHREN
NOZZLE, AIR ASSISTED SPRAYING DEVICE, ASSOCIATED COATING AND REPAIRING METHODS

(30) Priorité: 29.09.2022 FR 2209900
(43) Date de publication de la demande: 06.08.2025
(73) Titulaire: Safran Nacelles, 76700 Gonfreville-l'Orcher (FR)
(72) Inventeur: TASSERY, Dylan Laurent Pascal, 77550 Moissy-Cramayel (FR); GALLAIS, Manon, 77550 Moissy-Cramayel (FR); AMBLARD, Frédéric, 77550 Moissy-Cramayel (FR); PRUDHOMME, Grégory, 77550 Moissy-Cramayel (FR); BERNARD, Daniel, 23160 Azerables (FR)
(74) Mandataire: Cabinet Camus Lebkiri
(86) Numéro de dépôt international: PCT/FR2023/051466
(87) Numéro de publication internationale: WO 2024/069083

(56) Documents cités:
- EP-A1- 1 902 785
- DE-A1- 2 052 156
- FR-A1- 2 485 401
- JP-A- S5 147 936

## Description

### DOMAINE TECHNIQUE DE L'INVENTION

Le domaine technique de l'invention est celui de la réparation des pièces de turbomachine d'aéronef.

La présente invention concerne une buse, un dispositif de projection dynamique par gaz de matériau en poudre, un procédé de revêtement par projection dynamique et un procédé de réparation d'une bride annulaire de contact de turbomachine d'aéronef associés.

### ARRIERE-PLAN TECHNOLOGIQUE DE L'INVENTION

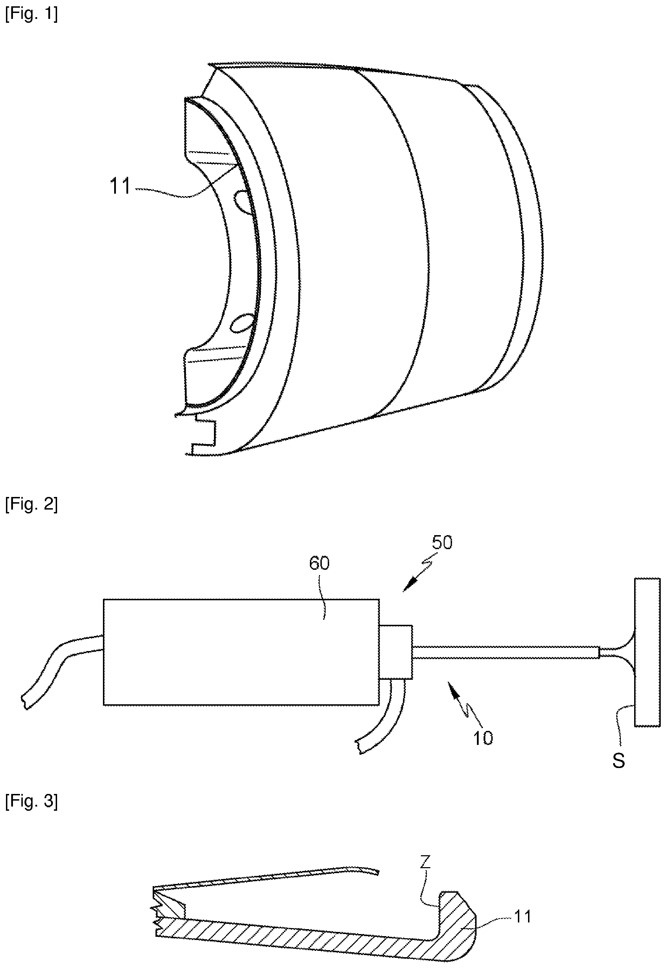

Fréquemment, dans le cadre de la réparation de composants de turbomachines d'aéronef, se posent des problématiques d'accessibilité de ces composants. Ces problématiques existent par exemple, pour des dommages lié à l'usure par frottement de bride annulaire de contact entre le moteur et l'inverseur d'une turbomachine (en anglais « J-Ring »), pour laquelle aucune solution de réparation structurale applicable industriellement n'est connue. En cas d'usure excessive, cette bride annulaire de contact est remplacée entièrement. Une telle bride annulaire de contact 11 est représentée sur la figure 1.

Un remplacement de J-Ring en aluminium est une opération complexe et longue. Ainsi, il serait bénéfique de trouver une alternative au remplacement de cette pièce permettant de réparer celle-ci sous aile, c'est-à-dire, lorsque la pièce est toujours installée sur la turbomachine, et permettant aussi de libérer l'aéronef rapidement.

Une méthode de réparation par projection dynamique (en anglais « cold spray »), appelée rechargement, peut être mise en œuvre avec une buse de projection par jet direct de poudre métallique à très haute vitesse permettant de combler les endommagements à la surface de pièces usées.

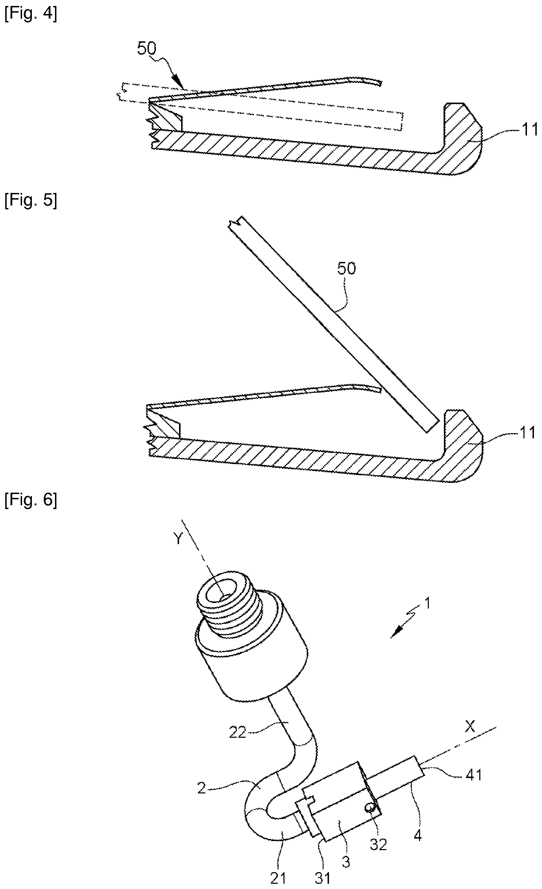

La figure 2 représente schématiquement un dispositif conventionnel de projection 50 muni d'une buse 10. Ce dispositif 50 comprend entre autres une buse 10 et une torche de projection 60 située dans le prolongement longitudinal de la buse 10. Le dispositif conventionnel 50 est placé en vis-à-vis d'une surface à recharger S, autrement dit à revêtir d'un matériau initialement poudreux. La figure 3 est une vue en coupe de la géométrie d'une bride annulaire de contact de type « J-Ring » 11 ainsi qu'une zone Z, à réparer, de cette bride annulaire de contact 11. Il peut être observé, comme illustré sur les figures 4 et 5, qu'un dispositif de projection comme illustré sur la figure 2 ne peut être inséré dans cette architecture sans interférer avec d'autres composants avoisinant la bride annulaire de contact 11. Autrement dit, la géométrie de la bride annulaire de contact de type « J-Ring » 11 rend impossible l'utilisation d'un dispositif de projection conventionnel 50 tel qu'illustré sur la figure 2.

Le document JP S51 47936 décrit un dispositif de pulvérisation d'une poudre.

### RESUME DE L'INVENTION

L'invention offre une solution aux problèmes évoqués précédemment, permettant de surmonter les problèmes d'accessibilité et d'encombrement précités afin de réparer sous aile une pièce de turbomachine de type « J-Ring », ou tout autre type de pièce dont la géométrie ne permet pas d'utiliser un dispositif de réparation conventionnel.

Un premier aspect de l'invention concerne une buse comprenant :
- un conduit d'alimentation en gaz de projection,
- une chambre de mélange de gaz de projection et de matériau en poudre en un mélange accéléré reliée, par une extrémité amont, au conduit d'alimentation en gaz de projection,
- un conduit de projection du mélange accéléré relié à une extrémité aval de la chambre de mélange,
- le conduit d'alimentation en gaz de projection étant en forme de « U » avec une première branche orientée selon un premier axe et une deuxième branche orientée selon un deuxième axe perpendiculaire au premier axe, la première branche étant reliée à l'extrémité amont,
- le conduit de projection du mélange accéléré s'étendant rectilignement le long du premier axe et comprend une ouverture de projection.

Grâce à l'invention, il est possible de positionner la buse selon l'invention de sorte que, après intégration dans un dispositif de projection par gaz, la direction de projection et la direction d'injection de gaz soient différentes.

Un deuxième aspect de l'invention concerne un dispositif de projection dynamique par gaz de matériau en poudre comprenant une buse telle que précédemment décrite et :
- une torche de projection s'étendant le long du deuxième axe et reliée à la deuxième branche du conduit d'alimentation en gaz de projection,
- un conduit d'alimentation en matériau en poudre relié à la chambre de mélange.

Ainsi, le dispositif de projection dynamique par gaz selon l'invention est plus compact et peut être inséré dans des espaces réduits tels que l'espace autour d'une bride annulaire de contact de type « J-Ring ». La réparation de tels composants « sous » aile, c'est-à-dire, encore installés sur une turbomachine, est ainsi possible et il n'est plus nécessaire de remplacer entièrement ces composants. Cette réparation sous aile offre un gain de temps par rapport à un remplacement entier.

Avantageusement, le conduit d'alimentation en matériau en poudre s'étend selon un troisième axe perpendiculaire au premier axe et au deuxième axe.

Un troisième aspect de l'invention concerne un procédé de revêtement par projection dynamique de poudre (métallique ou partiellement métallique) sur une pièce métallique mis en œuvre par un dispositif de projection dynamique tel que décrit précédemment, comprenant les étapes suivantes :
- positionnement d'une surface à revêtir en vis-à-vis de l'ouverture de projection,
- injection de gaz à haute vitesse dans la torche de projection,
- injection d'une poudre dans le conduit d'alimentation en matériau en poudre,
- projection du mélange formé par le gaz à haute vitesse et la poudre via le conduit de projection sur la surface à revêtir.

Dans le présent exposé, la poudre peut être métallique ou partiellement métallique.

Avantageusement, le gaz à haute vitesse est un gaz froid.

Dans le présent exposé, l'expression « gaz froid » désigne un gaz à haute vitesse présentant une température inférieure à 750°C.

Avantageusement, la poudre est composée en majorité d'aluminium ou alliage d'aluminium . Ce qui particulièrement est adapté pour une pièce en aluminium ou alliage d'aluminium.

Un quatrième aspect de l'invention concerne un procédé réparation d'une bride annulaire de contact de turbomachine d'aéronef mise en œuvre par un dispositif de projection dynamique tel que décrit précédemment, comprenant les étapes suivantes :
- positionnement d'une partie de la bride annulaire de contact à réparer en vis-à-vis de l'ouverture de projection,
- injection de gaz à haute vitesse dans la torche de projection,
- injection d'une poudre métallique dans le conduit d'alimentation en matériau en poudre,
- projection du mélange formé par le gaz à haute vitesse et la poudre métallique via le conduit de projection sur ladite partie,
- la bride annulaire de contact étant installée sur une turbomachine.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 montre d'une bride annulaire de contact de type « J-Ring » installée sur un inverseur de turbomachine d'aéronef.
- La figure 2 montre un dispositif de projection dynamique selon l'art antérieur.
- La figure 3 est une vue de profil d'une bride annulaire de contact telle que celle de la figure 1.
- La figure 4 représente schématiquement une intersection virtuelle d'un dispositif de projection dynamique selon l'art antérieur avec une bride annulaire de contact de type « J-Ring ».
- La figure 5 représente schématiquement une autre intersection virtuelle d'un dispositif de projection dynamique selon l'art antérieur avec une bride annulaire de contact de type « J-Ring ».
- La figure 6 représente une buse selon un exemple de réalisation de l'invention.
- La figure 7 représente une vue en perspective d'un dispositif de projection dynamique selon un exemple de réalisation de l'invention, en position fonctionnelle.
- La figure 8 représente une vue de profil du dispositif de projection dynamique de la figure 7 en position fonctionnelle de réparation d'une bride annulaire de contact de type « J-Ring ».

### DESCRIPTION DETAILLEE

Les figures sont présentées à titre indicatif et nullement limitatif de l'invention. Sauf précision contraire, un même élément apparaissant sur des figures différentes présente une référence unique.

Un premier objet de l'invention concerne une buse 1, représentée sur la figure 6.

La buse 1 de la figure 6 comprend :
- un conduit d'alimentation en gaz de projection 2,
- une chambre de mélange 3 de gaz de projection et de matériau en poudre en un mélange accéléré reliée, par une extrémité amont 31, au conduit d'alimentation en gaz de projection 2,
- un conduit de projection 4 du mélange accéléré relié à une extrémité aval 32 de la chambre de mélange 3.

Les termes amont et aval sont définis relativement au sens de propagation du mélange accéléré, depuis la chambre de mélange 3 vers une surface à recharger.

Le conduit d'alimentation en gaz de projection 2 est en forme de « U » avec une première branche 21 orientée selon un premier axe X et une deuxième branche 22 orientée selon un deuxième axe Y perpendiculaire au premier axe X. La première branche 21 est reliée à l'extrémité amont 31.

Le conduit de projection 4 du mélange accéléré s'étend rectilignement le long du premier axe X et comprend une ouverture de projection 41 par laquelle est projeté le mélange accéléré en provenance de la chambre de mélange 3. Cette alimentation après les coudes permet d'éviter un colmatage de la buse 2.

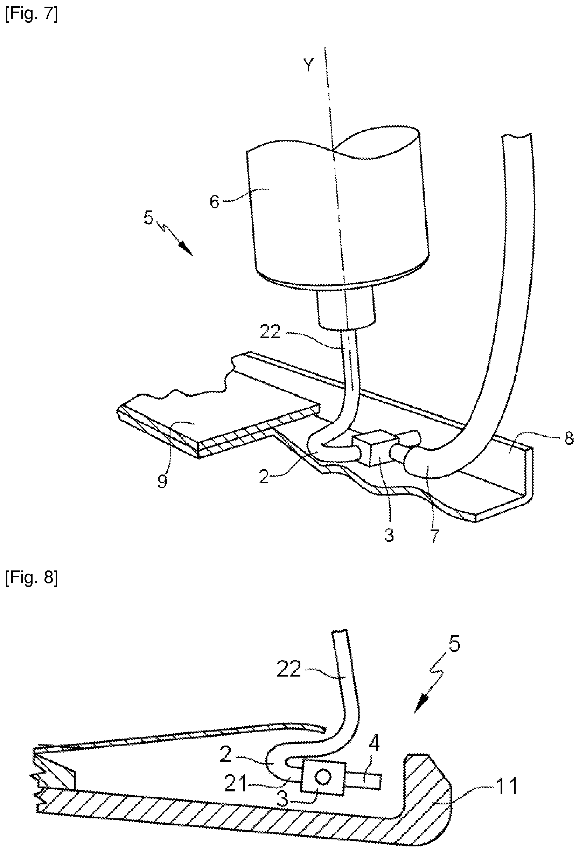

Un deuxième objet de l'invention concerne un dispositif de projection dynamique par gaz 5 de matériau en poudre comprenant une buse 1 telle que la buse 1 représentée sur la figure 6. Un exemple de ce dispositif de projection dynamique 5 est représenté sur la figure 7.

Le dispositif de projection dynamique 5 comprend en outre :
- une torche de projection 6 s'étendant le long du deuxième axe Y et reliée à la deuxième branche 22 du conduit d'alimentation en gaz de projection 2,
- un conduit d'alimentation en matériau en poudre 7 relié à la chambre de mélange 3.

Sur la figure 7 est également représentée une surface à recharger 8, autrement dit à revêtir de poudre métallique par le dispositif de projection dynamique 5. Par ailleurs, des éléments de géométrie 9 sont également représentés sur la figure 7. Ces éléments de géométrie 9 ne permettent pas l'utilisation d'un dispositif de projection conventionnel 50 tel que celui représenté sur la figure 2. En effet, ceux-ci interféreraient avec la torche de projection 60, qui ne pourrait pas être positionnée dans le prolongement de la buse 10, comme déjà illustré sur les figures 4 et 5.

Comme visible sur la figure 7, le positionnement de la torche de projection 6 le long du deuxième axe Y, ici, vertical, permet d'insérer le dispositif de projection dynamique 5 dans l'espace disponible entre la surface à recharger 8 et les éléments de géométrie 9. Ainsi, la projection de poudre métallique sur la surface à réparer 8 est rendue possible.

Avantageusement, le conduit d'alimentation en matériau en poudre 7 est relié à la chambre de mélange 3, autrement dit, en aval du conduit d'alimentation en gaz de projection 2. Cette position de la jonction entre le conduit d'alimentation en matériau en poudre 7 et la buse 1 évite une détérioration de cette dernière. En effet, des essais ont montré qu'une alimentation en poudre en amont de la forme en « U » du conduit d'alimentation en gaz de projection 2 engendre une perforation de la buse 1 ou un colmatage et rend celle-ci inutilisable dans cette configuration.

La figure 8 est une vue latérale du dispositif de projection dynamique 5 de la figure 7 en position fonctionnelle de projection sur une bride annulaire de contact de type « J-Ring » 11. Il peut être observé sur la figure 8 que la géométrie du dispositif de projection dynamique 5 permet son insertion de sorte à positionner le conduit de projection 4 sensiblement perpendiculairement à la surface intérieure de la bride annulaire de contact de type « J-Ring » 11.

On décrit à présent un procédé de réparation sous aile d'une bride annulaire de contact de type « J-Ring » 11 présentant des parties usagées.

La bride annulaire de contact 11 est installée sur une turbomachine d'aéronef.

Le dispositif de projection dynamique 5 précédemment décrit, tel qu'illustré sur la figure 7, est installé de sorte que le conduit de projection 4 soit approximativement perpendiculaire à une surface à recharger, avec, en vis-à-vis de la surface à recharger, l'ouverture de projection.

Préférentiellement, le principe de projection est une projection dynamique par gaz froid (« cold spray »).

Du gaz est acheminé dans le dispositif de projection dynamique 5 via la torche de projection 6 puis le conduit d'alimentation en gaz de projection 2. Le gaz est par exemple de l'azote ou de l'hélium. Le gaz est un gaz à très grande vitesse. Un matériau en poudre est acheminé dans le dispositif de projection dynamique 5 via le conduit d'alimentation en matériau en poudre 7. Par exemple, le matériau en poudre est une poudre d'aluminium.

Le gaz et le matériau en poudre se mélangent dans la chambre de mélange 3 pour former un mélange accéléré.

Le mélange accéléré est ensuite propulsé à une vitesse supersonique et éjecté du dispositif de projection dynamique 5 via l'ouverture de projection 41 vers la surface à recharger. Une fois propulsées hors de la buse 1, les particules solides formant le mélange accéléré, après une certaine distance de projection, entrent en collision avec la surface à recharger. Les particules s'empilent et forment sur la surface à recharger un revêtement.

Le dispositif de projection 5 peut alors être déplacé pour renouveler le procédé de rechargement afin de recharger une autre surface de la bride annulaire de contact.

Le procédé de réparation précédemment décrit pour une bride annulaire de contact peut être adapté à tout autre composant dont la forme et l'agencement dans une turbomachine ne permet pas l'utilisation d'un dispositif de projection conventionnel, tel que celui de la figure 1.

## Revendications

1. Dispositif de projection dynamique par gaz (5) de matériau en poudre comprenant :
∘ une buse (1) comprenant :
∘ un conduit d'alimentation en gaz de projection (2),
∘ une chambre de mélange (3) de gaz de projection et de matériau en poudre en un mélange accéléré reliée, par une extrémité amont (31), au conduit d'alimentation en gaz de projection (2),
∘ un conduit de projection (4) du mélange accéléré relié à une extrémité aval (32) de la chambre de mélange (3),
le conduit d'alimentation en gaz de projection (2) étant en forme de « U » avec une première branche (21) orientée selon un premier axe (X) et une deuxième branche (22) orientée selon un deuxième axe (Y) perpendiculaire au premier axe (X), la première branche (21) étant reliée à l'extrémité amont (31),
le conduit de projection (4) du mélange accéléré s'étendant rectilignement le long du premier axe (X) et comprenant une ouverture de projection (41),
ledit dispositif comprenant en outre :
∘ une torche de projection (6) s'étendant le long du deuxième axe (Y) et reliée à la deuxième branche (22) du conduit d'alimentation en gaz de projection (2), et
∘ un conduit d'alimentation (7) en matériau en poudre relié à la chambre de mélange (3), ledit dispositif étant **caractérisé en ce que** le conduit d'alimentation (7) en matériau en poudre s'étend selon un troisième axe perpendiculaire au premier axe (X) et au deuxième axe (Y).

2. Procédé de revêtement par projection dynamique de poudre sur une pièce métallique mis en œuvre par un dispositif de projection dynamique (5) de poudre selon la revendication précédente, comprenant les étapes suivantes :
- positionnement d'une surface à revêtir en vis-à-vis de l'ouverture de projection (41),
- injection de gaz à haute vitesse dans la torche de projection (6),
- injection d'une poudre dans le conduit d'alimentation (7) en matériau en poudre,
- projection du mélange formé par le gaz à haute vitesse et la poudre via le conduit de projection (4) sur la surface à revêtir.

3. Procédé de revêtement selon la revendication 2, **caractérisé en ce que** le gaz à haute vitesse est un gaz froid.

4. Procédé de revêtement selon l'une des revendications 2 ou 3, **caractérisé en ce que** la poudre est composée en majorité d'aluminium ou alliage d'aluminium.

5. Procédé de réparation d'une bride annulaire de contact (11) de turbomachine d'aéronef mise en œuvre par un dispositif de projection dynamique (5) selon la revendication 1, comprenant les étapes suivantes :
- positionnement d'une partie de la bride annulaire de contact (11) à réparer en vis-à-vis de l'ouverture de projection (41),
- injection de gaz à haute vitesse dans la torche de projection (6),
- injection d'une poudre métallique dans le conduit d'alimentation en matériau en poudre,
- projection du mélange formé par le gaz à haute vitesse et la poudre métallique via le conduit de projection (4) sur ladite partie,
**caractérisé en ce que** la bride annulaire de contact (11) est installée sur une turbomachine.

## Patentansprüche

1. Vorrichtung zum dynamischen Spritzen von pulverförmigem Material mittels Gas (5), umfassend:
- eine Düse (1) mit:
o einer Spritzgaszufuhrleitung (2),
o einer Mischkammer (3) zum Mischen von Gasspritzen und pulverförmigem Material zu einem beschleunigten Gemisch, die über ein stromaufwärtiges Ende (31) mit der Spritzgaszufuhrleitung (2) verbunden ist,
o eine Spritzleitung (4) für das beschleunigte Gemisch, die mit einem stromabwärtigen Ende (32) der Mischkammer (3) verbunden ist,
wobei die Spritzgaszufuhrleitung (2) U-förmig ist, mit einem ersten Schenkel (21), der entlang einer ersten Achse (X) ausgerichtet ist, und einem zweiten Schenkel (22), der entlang einer zweiten Achse (Y) senkrecht zur ersten Achse (X) ausgerichtet ist, wobei der erste Schenkel (21) mit dem stromaufwärtigen Ende (31) verbunden ist,
wobei sich die Spritzleitung (4) für das beschleunigte Gemisch geradlinig entlang der ersten Achse (X) erstreckt und eine Spritzöffnung (41) umfasst,
wobei die Vorrichtung außerdem umfasst:
- eine Spritzdüse (6), der sich entlang der zweiten Achse (Y) erstreckt und mit dem zweiten Schenkel (22) der Spritzgaszufuhrleitung (2) verbunden ist, und
- eine Zufuhrleitung (7) für pulverförmiges Material, die mit der Mischkammer (3) verbunden ist,
wobei die Vorrichtung **dadurch gekennzeichnet ist, dass** sich die Zufuhrleitung (7) für pulverförmiges Material entlang einer dritten Achse erstreckt, die senkrecht zur ersten Achse (X) und zur zweiten Achse (Y) steht.

2. Verfahren zum Beschichten eines Metallteils durch dynamisches Pulverspritzen, das mit einer Vorrichtung zum dynamischen Pulverspritzen (5) gemäß dem vorhergehenden Anspruch durchgeführt wird, mit den folgenden Schritten:
- Positionieren einer zu beschichtenden Oberfläche gegenüber der Spritzöffnung (41),
- Einspritzen von Gas mit hoher Geschwindigkeit in die Spritzdüse (6),
- Einspritzen eines Pulvers in die Zufuhrleitung (7) für pulverförmiges Material,
- Aufspritzen des durch das Hochgeschwindigkeitsgas und das Pulver gebildeten Gemisches über die Spritzleitung (4) auf die zu beschichtende Oberfläche.

3. Beschichtungsverfahren nach Anspruch 2, **dadurch gekennzeichnet, dass** das Hochgeschwindigkeitsgas ein kaltes Gas ist.

4. Beschichtungsverfahren nach einem der Ansprüche 2 oder 3, **dadurch gekennzeichnet, dass** das Pulver überwiegend aus Aluminium oder einer Aluminiumlegierung besteht.

5. Verfahren zur Reparatur eines ringförmigen Kontaktflansches (11) einer Flugzeugturbomaschine, das mit einer dynamischen Spritzvorrichtung (5) gemäß Anspruch 1 durchgeführt wird und die folgenden Schritte umfasst:
- Positionieren eines Bereichs des zu reparierenden ringförmigen Kontaktflansches (11) gegenüber der Spritzöffnung (41),
- Einspritzen von Gas mit hoher Geschwindigkeit in die Spritzdüse (6),
- Einspritzen eines Metallpulvers in die Zufuhrleitung für Pulvermaterial,
- Spritzen des aus dem Hochgeschwindigkeitsgas und dem Metallpulver gebildeten Gemisches über die Spritzleitung (4) auf den Bereich,
**dadurch gekennzeichnet, dass** der ringförmige Kontaktflansch (11) an einer Turbomaschine angebracht ist.

## Claims

1. A device for gas dynamically spraying (5) powdered material comprising
- a nozzle (1) comprising:
∘ a spray gas supply duct (2),
∘ a chamber (3) for mixing spray gas and powdered material to form an accelerated mixture, connected, through an upstream end (31), to the spray gas supply duct (2),
∘ a spray duct (4) for the accelerated mixture connected to a downstream end (32) of the mixing chamber (3),
the spray gas supply duct (2) being "U" shaped with a first arm (21) oriented along a first axis (X) and a second arm (22) oriented along a second axis (Y) perpendicular to the first axis (X), the first arm (21) being connected to the upstream end (31),
the spray duct (4) for the accelerated mixture rectilinearly extending along the first axis (X) and comprising a spray opening (41),
said device comprising:
- a spray torch (6) extending along the second axis (Y) and connected to the second arm (22) of the spray gas supply duct (2), and
- a powdered material supply duct (7) connected to the mixing chamber (3),
said device being **characterised in that** the powdered material supply duct (7) extends along a third axis perpendicular to the first axis (X) and to the second axis (Y).

2. A method for coating a metal piece by dynamically spraying powder, implemented by a device (5) for dynamically spraying powder according to the preceding claim, comprising the following steps of:
- positioning a surface to be coated facing the spray opening (41),
- injecting high-speed gas into the spray torch (6),
- injecting a powder into the powdered material supply duct (7),
- spraying the mixture formed by the high-speed gas and the powder via the spray duct (4) onto the surface to be coated.

3. The coating method according to claim 2, **characterised in that** the high-speed gas is a cold gas.

4. The coating method according to one of claims 2 or 3, **characterised in that** the powder is mostly comprised of aluminium or aluminium alloy.

5. A method for repairing an annular contact flange (11) for an aircraft turbomachine implemented by a dynamic spray device (5) according to claim 1, comprising the following steps of:
- positioning a part of the annular contact flange (11) to be repaired facing the spray opening (41),
- injecting high-speed gas into the spray torch (6),
- injecting a metallic powder into the powdered material supply duct,
- spraying the mixture formed by the high-speed gas and the metallic powder via the spray duct (4) onto said part,
**characterised in that** the annular contact flange (11) is installed on a turbomachine.
